# EUROPÄISCHE PATENTSCHRIFT

(11) **EP 0 788 900 B1**
(45) Veröffentlichungstag und Bekanntmachung des Hinweises auf die Patenterteilung: **19.08.1998**
(21) Anmeldenummer: 97101677.9
(22) Anmeldetag: 04.02.1997
(51) Int. Cl.: B60C 11/12, B60C 11/04, B60C 11/13

(54) **Fahrzeugluftreifen**
Vehicle tyre
Bandage pneumatique pour véhicule

(30) Priorität: 06.02.1996 DE 19604130
(43) Veröffentlichungstag der Anmeldung: 13.08.1997
(73) Patentinhaber: Continental Aktiengesellschaft, 30165 Hannover (DE)
(72) Erfinder: Frerichs, Udo, 30855 Langenhagen (DE); Metge, Axel, 30179 Hannover (DE); Pfaff, Daniel, 30938 Burgwedel (DE)

(56) Entgegenhaltungen:
- EP-A- 0 088 876
- DE-A- 4 232 306
- DE-A- 4 302 365
- US-A- 4 934 424
- US-A- 5 109 904
- PATENT ABSTRACTS OF JAPAN vol. 014, no. 454 (M-1031), 28.September 1990 & JP 02 182502 A (YOKOHAMA RUBBER CO LTD:THE), 17.Juli 1990

## Beschreibung

Die gegenständliche Erfindung betrifft einen Fahrzeugluftreifen mit einem lautrichtungsgebunden gestalteten Laufstreifenprofil, welches durch Umfangsnuten und Quernuten in Profilelemente, beispielsweise Blöcke, gegliedert ist, wobei Profilelemente vorgesehen sind, die durch eine Anzahl querverlaufender Feineinschnitte Profilelementbereiche unterschiedlicher Steifigkeit aufweisen.

Sowohl bei Fahrzeugluftreifen mit laufrichtungsgebundenen Laufstreifenprofilen als auch solchen, die nicht laufrichtungsgebunden gestaltet sind, ist der Effekt der Sägezahnbildung bekannt. Mit zunehmender Laufdauer des Reifens stellt sich ein charakteristisches Abriebsbild ein, bei dem die beim Abrollen des Reifens in den Untergrund zuerst einlaufende Kante der einzelnen Profilelemente, beispielsweise Blöcke, in einem geringerem Ausmaß dem Abrieb unterliegt, als die auslaufende Kante. Sind solche Profilblöcke mit in Profilquerrichtung oder in etwa in Profilquerrichtung verlaufenden Lamellenfeineinschnitten versehen, so kann in den Profilblöcken ein entsprechender mehrstufiger Sägezahn entstehen. Die negativen Folgen dieses Effektes sind eine Beeinträchtigung der Lautleistung und damit der Lebensdauer des Reifens sowie der Einfluß auf das Abrollgeräusch, da es durch die entstehenden örtlichen Absenkungen zu tieffrequenten, als sehr unangenehm empfundenen Anregungen kommt.

Es wurde schon verschiedentlich versucht, durch geeignete Maßnahmen das Entstehen des "Sägezahneffektes" zu unterbinden bzw. zu mildern. So wird beispielsweise in der US-PS 4934424 vorgeschlagen, in den Profilblöcken mehrere Lamellenfeineinschnitte anzuordnen, wobei die in der Blockmitte verlaufenden Lamellenfeineinschnitte die größte Tiefe besitzen. Im Deutschen Patent 4232306 wird für einen Reiten mit einem drehrichtungsgebundenen Laufstreifenprofil vorgeschlagen, den beim Abrollen des Reifens zuletzt in den Untergrund einlaufenden Bereich von Blöcken durch Lamellenfeineinschnitte mehr aufzuweichen, als den zuerst in die Bodenaufstandsfläche einlaufenden Bereich.

Die bekannten Lösungen zeigen zwar eine gewisse Wirkung, die jedoch nach wie vor nicht voll befriedigt, sodaß der gegenständlichen Erfindung die Aufgabe zugrunde liegt, eine gegenüber den bekannten Lösungen bessere Lösung des Problems aufzufinden.

Gelöst wird die gestellte Aufgabe erfindungsgemäß durch die Merkmale des unabhängigen Anspruchs 1.

Durch die erfindungsgemäße Abfolge der unterschiedliche Steifigkeit besitzenden Profilelementbereiche stellt sich mit zunehmender Laufleistung des Reitens gewollt, gewissermaßen gesteuert, ein Abriebsbild ein, bei dem der zuerst in die Bodenaufstandsfläche einlaufende Profilelementbereich leicht sägezahnförmig abreibt, jedoch kein bzw. kaum ein sägezahnförmiger Abrieb der nachfolgenden Profilelemente erfolgt. Die eingangs erwähnten Nachteile von aus dem Stand der Technik bekannten Lösungen, insbesondere eine verringerte Laufleistung und eine unangenehme Beeinflussung des Reifen/Fahrbahngeräusches sind bei erfindungsgemäß gestalteten Profilelementen nicht feststellbar.

Die erwünschte Weichheit bzw. Steifigkeit der einzelnen Profilelementbereiche läßt sich dadurch einstellen, daß die Lamellenfeineinschnitte über ihre Längserstreckung mit sich ändernder Tiefe ausgeführt werden.

Bei einer bevorzugten Ausführungsform der Erfindung besitzt ein Lamellenfeineinschnitt, welcher einen weichen Profilelementbereich abschließt, im Einmündungsbereich in eine Umfangsnut einen Abschnitt größerer Tiefe und an diesen anschließend einen Abschnitt geringerer Tiefe. Dabei kann dieser Lamellenfeineinschnitt an den Abschnitt mit geringerer Tiefe anschließend einen dritten Abschnitt mit wiederum größerer Tiefe besitzen, mit welchem der Feineinschnitt gegebenenfalls in eine weitere Umfangsnut einmündet.

Erfindungsgemäß wird ein Lamellenfeineinschnitt, der einen härteren Profilelementbereich abschließt, derart gestaltet, daß sein in eine Umfangsnut mündende Abschnitt eine geringere Tiefe aufweist als der an diesen Abschnitt anschließende Abschnitt. Alternativ dazu kann dieser Feineinschnitt auch so gestaltet werden, daß er keine in Umfangsnuten mündenden Bereiche besitzt und sich im wesentlichen nur aus einem Abschnitt größerer Tiefe zusammensetzt.

Durch diese Feineinschnittausgestaltungen lassen sich die einzelnen Profilelementbereiche in der erwünschten Art und Weise weicher bzw. härter gestalten.

Die Weichheit bzw. Steifigkeit der einzelnen Profilelementbereiche läßt sich ferner dadurch gut einstellen, wenn in den Feineinschnitten die Abschnitte größerer Tiefe eine Tiefe zwischen 50 und 90 %, insbesondere zwischen 60 und 75 %, der Dessintiefe, und die Abschnitte geringerer Tiefe eine Tiefe zwischen 20 und 40 %, insbesondere zwischen 25 und 35 %, der Dessintiefe besitzen.

Von besonderem Vorteil ist es, eine erfindungsgemäße Ausgestaltung in Profilelementen zu treffen, die Blöcke einer Schulterblockreihe sind. Es ist bekannt, daß gerade diese Laufstreifenprofilbereiche anfällig für sägezahnförmigen Abrieb sind, und es zeigte sich, daß die Erfindung vor allem in diesen Laufstreifenbereichen ausgezeichnete Ergebnisse brachte.

Dabei hat es sich zusätzlich als günstig herausgestellt, wenn erfindungsgemäß ausgeführte Blöcke in Schulterblockreihen zwei Feineinschnitte besitzen, durch die die erwähnte Abfolge von weichem, härterem und weichem Profilelement bzw. Blockbereich realisiert ist. Dadurch ist nämlich eine insgesamt ausgewogene Blocksteifigkeit gegeben. Es ist ferner auch vorteilhaft, wenn die der Schulterblockreihe zur Laufstreifenmitte zu benachbarten und von der Schulterblockreihe durch eine Umfangsnut getrennten Profilelemente, insbesondere Blöcke oder blockähnliche Profilstrukturen, erfindungsgemäß ausgeführt sind.

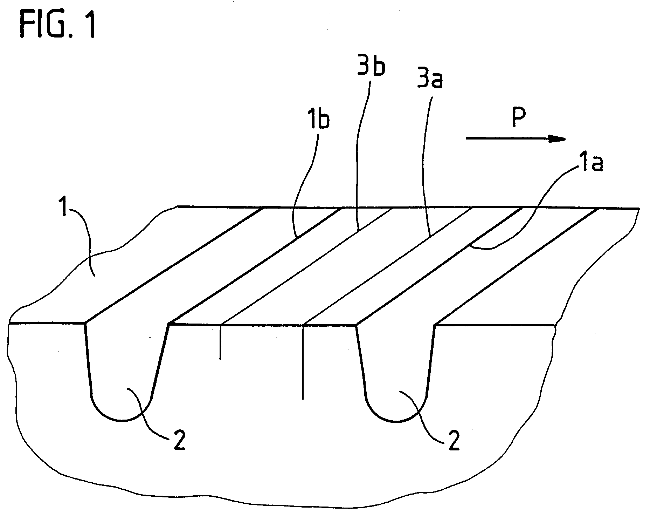

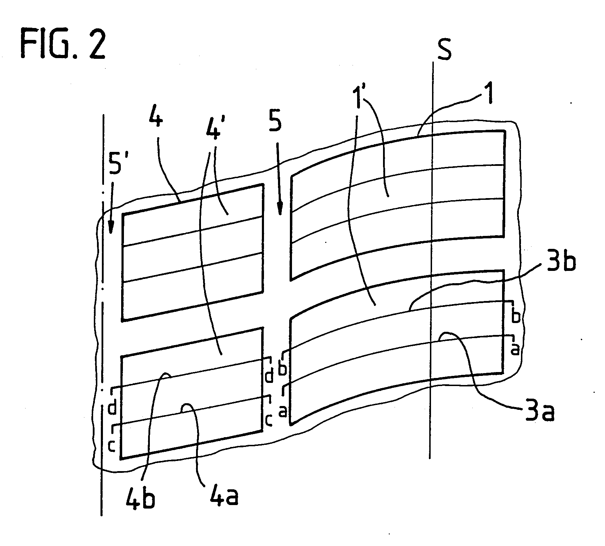

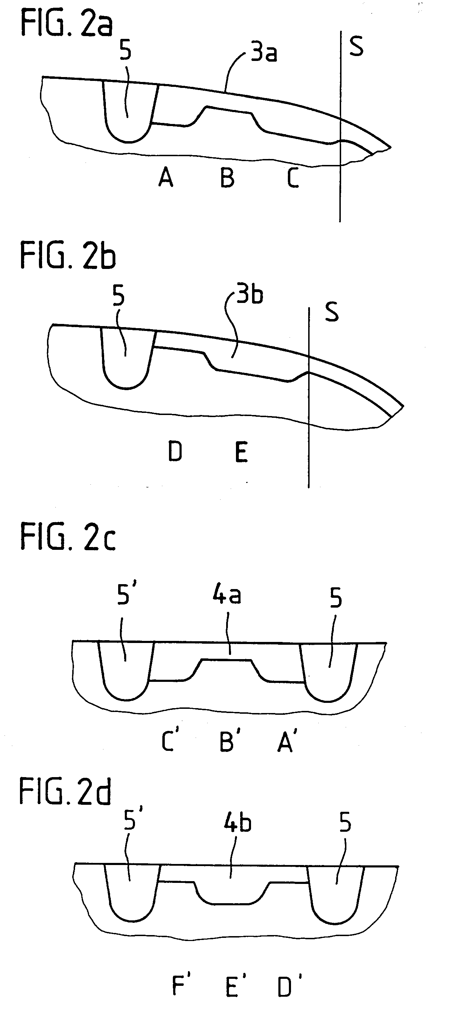

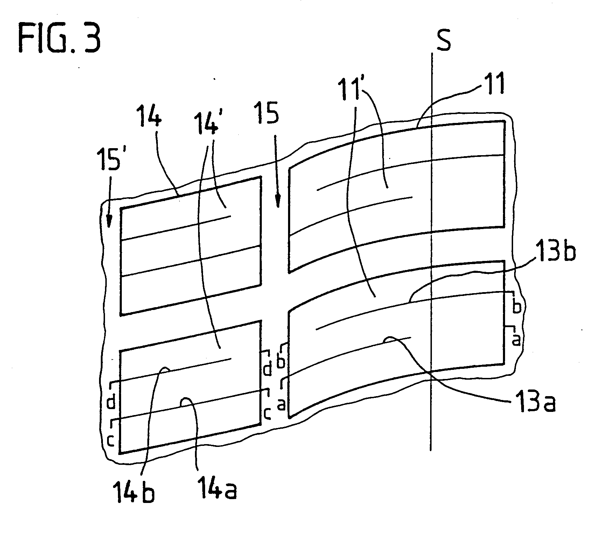

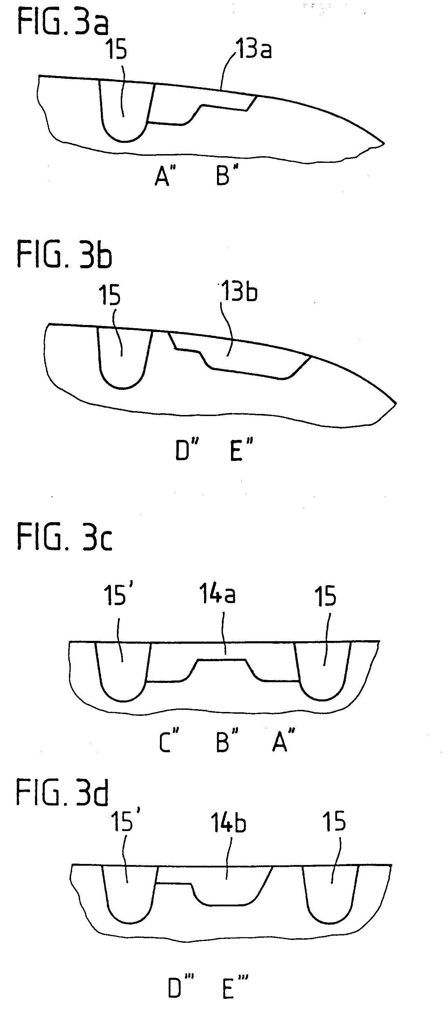

Weitere Merkmale, Vorteile und Einzelheiten der Erfindung werden nun anhand der Zeichnung, die mehrere Ausführungsbeispiele darstellt, näher beschrieben. Dabei zeigt Fig. 1 schematisch die Schrägansicht eines Schulterblockes des Laufstreifens eines Fahrzeugluftreifens, Fig. 2 und Fig. 3 schematisch Draufsichten auf Bereiche von erfindungsgemäß ausgeführten Laufstreifenprofilen, Fig. 2a einen Schnitt entlang der Linie a-a der Fig. 2, Fig. 2b einen Schnitt entlang der Linie b-b der Fig. 2, Fig. 2c einen Schnitt entlang der Linie c-c der Fig. 2, Fig. 2d einen Schnitt entlang der Linie d-d der Fig. 2, Fig. 3a einen Schnitt entlang der Linie a-a der Fig. 3, Fig. 3b einen Schnitt entlang der Linie b-b der Fig. 3, Fig. 3c einen Schnitt entlang der Linie c-c der Fig. 3 und Fig. 3d einen Schnitt entlang der Linie d-d der Fig. 3.

Die gegenständliche Erfindung betrifft Fahrzeugluftreifen, insbesondere PKW-Reifen, mit einem drehrichtungsgebundenen Laufstreifenprofil. Solche Profile besitzen, meist aufgrund eines besonderen, insbesondere pfeilartigen Verlaufes von Querrillen, eine bestimmte Abroll- bzw. Drehrichtung. Nur bei der vorgesehenen Anordnung dieser Reifen am Fahrzeug, die der Drehrichtung Rechnung trägt, sind bestimmte Reifen- und Profileigenschaften gegeben. Um ein Wasserableitvermögen des Profils zur Seite hin zu gewährleisten, besitzen auch solche Reifen, ebenso wie Reifen mit nicht drehrichtungsgebundenen Profilen üblicherweise in den den Reifenschultern benachbarten Profilbereichen Profilelemente, die in Umfangsrichtung voneinander durch Querrillen getrennt sind. Ein solches Profilelement mit den unmittelbar angrenzenden Profilstrukturen ist in Fig. 1 dargestellt. Fig. 1 zeigt demnach einen Schulterblock 1 aus einer Schulterblockreihe mit diesen Block 1 von benachbarten Blöcken 1 trennenden Querrillen 2. Im dargestellten Ausführungsbeispiel verlaufen die Querrillen 2 über jene Breite des Laufstreifenprofiles hinaus, die seiner Breite in der Bodenaufstandsfläche (gemäß E.T.R.T.O.-Standards) entspricht. Die mit S bezeichnete Linie versinnbildlicht den einen zugehörigen Laufstreitenrand. An dieser Stelle sei erwähnt, daß von der gegenständlichen Erfindung, die im nachfolgenden näher erläutert wird, auch Laufstreifenprofile erfaßt sind, bei denen die Querrillen innerhalb des bodenberührenden Teiles des Laufstreifens enden.

Zu den weiteren, in Fig. 1 nicht dargestellten Profilelementen des Laufstreifenprofiles, die zur Laufstreifenmitte zu an die Schulterblockreihe anschließen, ist die Schulterblockreihe durch eine beliebig gestaltbare Umfangsnut, die beispielsweise als gerade umlaufende oder zick-zack-förmig gestaltete Nut ausgebildet sein kann, getrennt.

Wie aus Fig. 1 ersichtlich ist, besitzt der dargestellte Schulterblock 1 zwei Lamellenfeineinschnitte 3a, 3b, auf deren spezielle Ausgestaltung anhand der weiteren Zeichnungsfiguren noch eingegangen wird. Aufgrund der bevorzugten Abrollrichtung des Reifens, die durch den Pfeil P in Fig. 1 gekennzeichnet ist, besitzt jeder Schulterblock 1 eine Blockkante 1a, mit der der Block 1 in die Kontaktfläche mit dem Untergrund eintritt und im folgenden als einlaufende Blockkante bezeichnet ist, und eine Blockkante 1b, mit der der Block 1 wieder aus der Kontaktfläche mit dem Untergrund austritt, die im folgenden als auslaufende Blockkante 1b bezeichnet ist.

Fig. 2 zeigt nun schematisch eine Draufsicht auf zwei in Umfangsrichtung benachbarte Schulterblöcke 1 und auf zwei Blöcke 4, die in der in Querrichtung benachbarten Blockreihe verlaufen und durch eine Umfangsnut 5 von den Schulterblöcken 1 getrennt sind. Zur Laufstreifenmitte zu, die hier nicht dargestellt ist, schließt an die Blöcke 4 eine weitere Umfangsnut 5' an. Die Schulterblöcke 1 sind mit je zwei Lamellenfeineinschnitten 3a, 3b, die Blöcke 4 mit je zwei Lamellenfeineinschnitten 4a, 4b versehen. Die Blöcke 1, 4 sind in Anwendung des Verfahrens der Pitchlängenvariation, welches aus dem Stand der Technik hinreichend bekannt ist, in Umfangsrichtung unterschiedlich lang gewählt. Durch die Lamellenfeineinschnitte 3a, 3b und 4a, 4b ist jeder Block 1, 4 in zumindest im wesentlichen gleich große Blockteile 1', 4' gegliedert. Dabei ist eine Ausführung getroffen, bei der die Lamellenfeineinschnitte 3a, 3b, 4a, 4b zumindest annähernd parallel zu den in Querrichtung orientierten Blockkanten der Blöcke 1, 4 verlaufen.

Fig. 2a zeigt nun einen Schnitt durch den Lamellenfeineinschnitt 3a aus Fig. 2, welcher jener Lamellenfeineinschnitt ist, der der einlaufenden Blockkante 1a benachbart verläuft. Der Lamellenfeineinschnitt 3a besitzt von seinem Einmündungsbereich in die Umfangsnut 5 ausgehend einen Abschnitt A, wo seine Tiefe zwischen 50 und 90 %, insbesondere zwischen 60 und 75 % der Dessintiefe beträgt, an diesen anschließend einen Abschnitt B mit verringerter Tiefe, die zwischen 20 und 40 %, insbesondere 25 bis 35 %, der Dessintiefe gewählt wird. An den Abschnitt B schließt ein Abschnitt C mit wiederum etwas größerer Tiefe an, die im erwähnten Bereich für die Tiefe des Abschnittes A gewählt wird. Die Übergänge zwischen den einzelnen Abschnitten werden bevorzugt durch Schrägen mit oder ohne Abrundungen durchgeführt. Die Länge jedes dieser Abschnitte A, B, C wird zwischen 25 und 35 % der Feineinschnittlänge bis zum Rand der Bodenaufstandsfläche, die durch die Linie S gekennzeichnet ist, gewählt.

Der zweite Lamellenfeineinschnitt 3b, welcher der auslaufenden Blockkante benachbart ist, besitzt, wie Fig. 2b zeigt, ebenfalls Abschnitte D, E von unterschiedlicher Tiefe. Dabei besitzt der an die Umfangsnut 5 unmittelbar anschließende Abschnitt D eine geringere Tiefe, der an diesen anschließende Abschnitt E eine größere Tiefe. Die Tiefe des Abschnittes D wird im Bereich der Tiefe des Abschnittes B des Feineinschnittes 3a, die Tiefe des Abschnittes E im Bereich der Tiefe des Abschnittes A des Lamellenfeineinschnittes 3a gewählt. Die Längserstreckung des Abschnittes D entspricht zumindest im wesentlichen der Längserstreckung des Abschnittes A des Lamellenfeineinschnittes 3a. Der Abschnitt E kann sich bis zum Rand der Bodenaufstandsfläche erstrecken oder auch in einen weiteren Abschnitt mit geringerer Tiefe übergehen.

Fig. 2c zeigt einen Schnitt durch den Lamellenfeineinschnitt 4a im Block 4, wobei dieser Lamellenfeineinschnitt 4a wiederum jener ist, welcher der einlaufenden Blockkante dieses Blockes benachbart verläuft. Auch dieser Lamellenfeineinschnitt 4a besitzt in jenen Bereichen, wo er in die Umfangsnuten 5, 5' einmündet, tiefe Abschnitte A', C', dazwischen liegt ein seichterer Abschnitt B'. Dabei werden die Tiefen dieser Abschnitte, wie schon oben erwähnt, gewählt, ebenso ihre Längserstreckung.

Fig. 2d zeigt einen Querschnitt durch den der auslaufenden Blockkante benachbarten Feineinschnitt 4b, mit Abschnitten, die gegenläufig zu jenen der Abschnitte A', B', C' gestaltet sind, sodaß die in die Umfangsnuten 5, 5' einmündenden Abschnitte D', F' eine geringere Tiefe besitzen und der mittlere Abschnitt E' eine große Tiefe. Für die Wahl der Tiefe gelten auch hier die schon erwähnten Bedingungen.

Fig. 3 zeigt eine weitere Ausführungsvariante der Erfindung, wobei auch hier zwei Schulterblöcke 11 mit benachbarten Blöcken 14, die durch eine Umfangsnut 15 von den Schulterblöcken 11 getrennt sind und von nicht dargestellten zur Laufstreifenmitte zu benachbarten Profilelementen durch eine Umfangsnut 15' getrennt sind. Die Lamellenfeineinschnitte 13a, 13b sowie 14a und 14b sind so gestaltet bzw. angeordnet, daß der der einlaufenden Blockkante benachbarte Feineinschnitt 13a, 14a jeweils in die Umfangsnut 15 einmündet, wobei der Feineinschnitt 13a vor dem Laufstreifenrand endet, die Feineinschnitte 13b, 14b nicht in die Umfangsnut 15 münden. Auch durch diese Feineinschnittanordnung erfolgt eine Gliederung der Blöcke 11, 14 in Blockteile 11', 14'. Fig. 3a zeigt nun einen Schnitt durch den Feineinschnitt 13a im Schulterblock 11, der der Umfangsnut 15 benachbart einen tiefen Abschnitt A'' besitzt, an den ein seichter Abschnitt B'' anschließt. Die Längserstreckung dieser Abschnitte A'', B'' wird wie die Länge der Abschnitte A und B des Feineinschnittes 3a des ersten Ausführungsbeispiels gewählt. Der in Fig. 3b dargestellte Schnitt durch den Feineinschnitt 13 b zeigt, daß dieser Feineinschnitt, in einem Abstand von der Umfangsnut 15 mit einem kurzen seichten Abschnitt D'' beginnt, welchen ein längerer tiefer Abschnitt E'' anschließt. Im wesentlichen entsprechen daher diese Feineinschnitte 13a, 13b den Feineinschnitten 3a und 3b mit dem Unterschied, daß der Feineinschnitt 13a bereits vor dem Laufstreifenrand und der Feineinschnitt 13 b bereits vor der Umfangsnut 15 endet.

Die in Fig. 3c und 3d dargestellten Querschnitte durch die Feineinschnitte 14a und 14b zeigen hier eine analoge Ausgestaltung. Der Feineinschnitt 14a besitzt einen Querschnitt, der jenem des Feineinschnittes 4a mit tiefen Abschnitten A''' und C''', einem dazwischenliegenden seichten Abschnitt B''', entspricht, der Feineinschnitt 14b besitzt einen tiefen Abschnitt E'''' im mittleren Bereich und einen seichten Abschnitt D'''', der in die Umfangsnut 15' mündet. Die Längserstreckung dieser Abschnitte sowie die jeweiligen Tiefen, entsprechen jenen, wie sie anhand des ersten Ausführungsbeispieles beschrieben wurden.

Sämtliche Lamellenfeineinschnitte 3a, 3b, 4a, 4b, 13a, 13b, 14a, 14b besitzen eine Breite von 0,4 bis 1,5 mm, insbesondere bis 0,8 mm.

Durch die spezielle Gestaltung der Feineinschnitte ist der der einlaufenden Blockkante benachbarte Blockteil 1', 4', 11', 14' weicher bzw. nachgiebiger gestaltet als der zwischen den jeweils benachbarten Feineinschnitten gebildete Blockteil, der relativ hart bzw. biegesteif ist, wobei der dritte Blockteil, der der auslaufenden Blockkante benachbart ist, wiederum weicher ist. Dadurch wird bewußt eine Abfolge von relativ weichen, relativ harten und relativ weichen Blockteilen geschaffen, wodurch der der einlaufenden Blockkante benachbarte Blockteil nach einer gewissen Lautleistung leicht sägezahnförmig abreibt, wobei dieser Abrieb im Bereich der in die Umfangsnut 5 bzw. 15 einmündenden Abschnitte der Feineinschnitte etwas größer ist. Es erfolgt jedoch kein bzw. kaum ein sägezahnförmiger Abrieb der nachfolgenden Blockteile. Insgesamt hat sich dabei herausgestellt, daß Blöcke mit einer erfindungsgemäßen Lamellenfeineinschnittausgestaltung ein Abriebsbild zeigen, das die eingangs erwähnten Nachteile von bekannten Ausgestaltungen, insbesondere eine sehr unangenehme Beeinflussung des Reifen/Fahrbahngeräusches und eine verringerte Laufleistung nicht aufweisen.

Die Erfindung ist auf die dargestellten Ausführungsformen nicht eingeschränkt. So ist es grundsätzlich auch möglich, Blöcke bzw. Profilelemente vorzusehen, wo mehr als zwei, insbesondere drei, Lamellenfeineinschnitte vorgesehen sind. Auch hier wird durch die spezielle Gestaltung des Querschnitte bzw. Verlaufes der Lamellenfeineinschnitte eine Abfolge von einzelnen Blockteilen gewählt, bei dem der einlaufenden Blockkante benachbarte Blockteil weich, der nachfolgende hart, der auf diesen folgende wiederum weich, und der der auslaufenden Blockkante benachbarte wiederum hart gestaltet wird. Erwähnt sei ferner, daß durch die bereits erwähnte Anwendung des Verfahrens der Pitchlängenvariation bei einem Laufstreifenprofil auch Blöcke vorhanden sein könne, die aufgrund ihrer kurzen Länge lediglich mit einem Lamellenfeineinschnitt versehen werden. Bei einer solchen Ausgestaltung ist es dabei günstig, wenn der einzige Lamellenfeineinschnitt der jeweils in jene Umfangsnut einmündet, die die Schulterblockreihe von Laufstreifenmitte zu benachbarten Profilelementen trennt, einen tiefen Abschnitt besitzt.

Wie dargestellt können die Feineinschnitte und die ein- bzw. auslaufenden Blockkanten bezüglich ihrer Ausrichtung bzw. ihres Verlaufes übereinstimmen. Es sind jedoch auch Ausführungsformen möglich, wo der Verlauf der Block- bzw. Profilelementkanten mit dem Verlauf der Feineinschnitte nicht übereinstimmt. Es ist ferner nicht erforderlich, daß die Feineinschnitte einen geraden Verlauf aufweisen, sie können auch einen gekrümmten oder auch leicht wellenförmigen Verlauf besitzen.

## Patentansprüche

1. Fahrzeugluftreifen mit einem laufrichtungsgebunden gestalteten Laufstreifenprofil, welches durch Umfangsnuten und Quernuten in Profilelemente, beispielsweise Blöcke, gegliedert ist, wobei Profilelemente vorgesehen sind, die durch eine Anzahl querverlaufender Feineinschnitte Profilelementbereiche unterschiedlicher Steifigkeit aufweisen, dadurch gekennzeichnet, daß die Profilelementbereiche (1', 4', 11', 14') unterschiedlicher Steifigkeit aufweisende Profilelemente (1,4,11,14) ausgehend von dem zuerst in die Bodenaufstandsfläche einlaufenden Profilelementbereich eine alternative Abfolge von weichen und härteren Profilelementbereichen (1', 4', 11', 14') besitzen, und
daß die Lamellenfeineinschnitte (3a, 3b, 4a, 4b, 13a, 13b, 14a, 14b) über ihre Längserstreckung mit sich ändernder Tiefe ausgeführt sind.

2. Fahrzeugluftreiten nach Anspruch 1, dadurch gekennzeichnet, daß der Lamellenfeineinschnitt (3a, 4a, 13a, 14a), welcher einen weichen Profilelementbereich abschließt, im Einmündungsbereich in eine Umfangsnut (5, 15) einen Abschnitt größerer Tiefe und an diesen anschließend einen Abschnitt geringerer Tiefe besitzt.

3. Fahrzeugluftreifen nach Anspruch 2, dadurch gekennzeichnet, daß der Lamellenfeineinschnitt (3a, 4a, 14a) an den Abschnitt mit geringerer Tiefe anschließend einen dritten Abschnitt mit wiederum größerer Tiefe besitzt, mit welchem der Feineinschnitt (4a, 14a) gegebenenfalls in eine weitere Umfangsnut (5', 15') einmündet.

4. Fahrzeugluftreiten nach Anspruch 1, dadurch gekennzeichnet, daß der Lamellenfeineinschnitt (3b, 4b), der einen härteren Profilelementbereich abschließt, im Einmündungsbereich in eine Umfangsnut (5, 15, 15') einen Abschnitt geringerer Tiefe und an diesen anschließend einen Abschnitt größerer Tiefe besitzt.

5. Fahrzeugluftreifen nach Anspruch 1, dadurch gekennzeichnet, daß der einen härteren Profilelementbereich abschließende Lamellenfeineinschnitt (13b) keine in Umfangsnuten mündende Bereiche besitzt und sich im wesentlichen nur aus einem Abschnitt größerer Tiefe zusammensetzt.

6. Fahrzeugluftreifen nach einem der Ansprüche 1 bis 5, dadurch gekennzeichnet, daß in den Lamellenfeineinschnitten (3a, 3b, 4a, 4b, 13a, 13b, 14a, 14b) die Abschnitte größerer Tiefe eine Tiefe zwischen 50 und 90 %, insbesondere zwischen 60 und 75 %, der Dessintiefe, und die Abschnitte geringerer Tiefe eine Tiefe zwischen 20 und 40 %, insbesondere zwischen 25 und 35 %, der Dessintiefe besitzen.

7. Fahrzeugluftreifen nach einem der Ansprüche 1 bis 6, dadurch gekennzeichnet, daß die Profilelemente Blöcke (1, 11) einer Schulterblockreihe des Laufstreifenprofiles sind.

8. Fahrzeugluftreifen nach Anspruch 7, dadurch gekennzeichnet, daß diese Blöcke (1, 11) zwei Lamellenfeineinschnitte (3a, 3b, 13a, 13b) besitzen, die vorzugsweise den Block (1,11) in im wesentlichen gleich große Blockteile (1', 11') gliedern.

9. Fahrzeugluftreifen nach einem der Ansprüche 1 bis 8, dadurch gekennzeichnet, daß die Profilelemente Blöcke oder blockähnliche Profilstrukturen sind, die der Schulterblockreihe benachbart verlaufen und von der Schulterblockreihe durch eine Umfangsnut (5, 15) getrennt sind.

## Claims

1. Pneumatic vehicle tyre, having a tread strip profile, which has a configuration adapted to the direction of travel and is divided into profile elements, for example blocks, by means of circumferential grooves and transverse grooves, profile elements being provided, which comprise profile element regions of variable rigidity as a result of a number of transversely extending fine incisions, characterised in that the profile elements (1, 4, 11, 14), comprising profile element regions (1', 4', 11', 14') of variable rigidity, have an alternative sequence of soft and harder profile element regions (1', 4', 11', 14') starting from the profile element region initially entering the ground-engaging surface, and in that the fine laminar incisions (3a, 3b, 4a, 4b, 13a, 13b, 14a, 14b) are provided with a varying depth over their longitudinal extent.

2. Pneumatic vehicle tyre according to claim 1, characterised in that the fine laminar incision (3a, 4a, 13a, 14a), which terminates a soft profile element region, has a portion of greater depth where it extends into a circumferential groove (5, 15) and a portion of smaller depth adjacent said portion of greater depth.

3. Pneumatic vehicle tyre according to claim 2, characterised in that, adjacent the portion of smaller depth, the fine laminar incision (3a, 4a, 14a) has a third portion with, in turn, a greater depth, with which third portion the fine incision (4a, 14a) possibly extends into an additional circumferential groove (5', 15').

4. Pneumatic vehicle tyre according to claim 1, characterised in that the fine laminar incision (3b, 4b), which terminates a harder profile element region, has a portion of smaller depth where it extends into a circumferential grooove (5, 15, 15') and a portion of greater depth adjacent said portion of smaller depth.

5. Pneumatic vehicle tyre according to claim 1, characterised in that the fine laminar incision (13b), terminating a harder profile element region, has no regions extending into circumferential grooves and substantially comprises only a portion of greater depth.

6. Pneumatic vehicle tyre according to one of claims 1 to 5, characterised in that the portions of greater depth in the fine laminar incisions (3a, 3b, 4a, 4b, 13a, 13b, 14a, 14b) have a depth between 50 and 90 %, more especially between 60 and 75 %, of the pattern depth, and the portions of smaller depth have a depth between 20 and 40 %, more especially between 25 and 35 %, of the pattern depth.

7. Pneumatic vehicle tyre according to one of claims 1 to 6, characterised in that the profile elements are blocks (1, 11) of a row of shoulder blocks of the tread strip profile.

8. Pneumatic vehicle tyre according to claim 7, characterised in that these blocks (1, 11) have two fine laminar incisions (3a, 3b, 13a, 13b), which preferably divide the block (1, 11) into block portions (1', 11') of substantially identical dimensions.

9. Pneumatic vehicle tyre according to one of claims 1 to 8, characterised in that the profile elements are blocks or block-like profile structures, which extend adjacent the row of shoulder blocks and are separated from the row of shoulder blocks by a circumferential groove (5, 15).

## Revendications

1. Bandage pneumatique pour véhicule, comprenant un profil de bande de roulement dont la conformation est liée au sens de marche et qui est divisé par des gorges circonférentielles et des gorges transversales en éléments de profil, en blocs par exemple, avec prévision d'éléments de profil présentant, en raison de la présence d'un certain nombre de fines incisions transversales, des zones d'élément de profil de raideurs différentes, caractérisé en ce que les éléments de profil (1, 4, 11, 14) présentant des zones d'élément de profil (1', 4', 11', 14') de raideurs différentes, possèdent, à partir de la zone d'élément de profil entrant en premier dans l'aire d'appui au sol, une succession alternante de zones d'élément de profil (1', 4', 11', 14') souple(s) et plus dure(s), et que les fines incisions à lamelles (3a, 3b, 4a, 4b, 13a, 13b, 14a, 14b) sont réalisées avec une profondeur variable sur leur étendue longitudinale.

2. Bandage pneumatique pour véhicule selon la revendication 1, caractérisé en ce que la fine incision à lamelle (3a, 4a, 13a, 14a) terminant une zone d'élément de profil souple, possède un segment de plus grande profondeur dans la zone d'embouchure dans une gorge circonférentielle (5, 15) et, à la suite de celui-ci, un segment de plus faible profondeur.

3. Bandage pneumatique pour véhicule selon la revendication 2, caractérisé en ce que la fine incision à lamelle (3a, 4a, 14a) possède, à la suite du segment à plus faible profondeur, un troisième segment ayant de nouveau une plus grande profondeur, par lequel la fine incision (4a, 14a) débouche éventuellement dans une autre gorge circonférentielle (5', 15').

4. Bandage pneumatique pour véhicule selon la revendication 1, caractérisé en ce que la fine incision à lamelle (3b, 4b) terminant une zone d'élément de profil plus dure, possède un segment de plus faible profondeur dans la zone d'embouchure dans une gorge circonférentielle (5, 15, 15') et, à la suite de celui-ci, un segment de plus grande profondeur.

5. Bandage pneumatique pour véhicule selon la revendication 1, caractérisé en ce que la fine incision à lamelle (13b) terminant une zone d'élément de profil plus dure, ne possède pas de zones débouchant dans des gorges circonférentielles et est constituée essentiellement d'un seul segment de profondeur relativement grande.

6. Bandage pneumatique pour véhicule selon une des revendications 1 à 5, caractérisé en ce que, dans les fines incisions à lamelles (3a, 3b, 4a, 4b, 13a, 13b, 14a, 14b), les segments de plus grande profondeur ont une profondeur entre 50 et 90 %, en particulier entre 60 et 75 %, de la profondeur de dessin, et les segments de plus faible profondeur ont une profondeur entre 20 et 40 %, en particulier entre 25 et 35 %, de la profondeur de dessin.

7. Bandage pneumatique pour véhicule selon une des revendications 1 à 6, caractérisé en ce que les éléments de profil sont des blocs (1, 11) d'une rangée de blocs d'épaulement du profil de la bande de roulement.

8. Bandage pneumatique pour véhicule selon la revendication 7, caractérisé en ce que ces blocs (1, 12) possèdent deux fines incisions à lamelles (3a, 3b, 13a, 13b) qui partagent de préférence le bloc (1, 11) en parties de bloc (1', 11') ayant essentiellement la même grandeur.

9. Bandage pneumatique pour véhicule selon une des revendications 1 à 8, caractérisé en ce que les éléments de profil sont des blocs ou des structures de profil semblables à des blocs situés à proximité de la rangée de blocs d'épaulement dont ils sont séparés par une gorge circonférentielle (5, 15).
